# FASCICULE DE BREVET EUROPEEN

(11) **EP 3 213 823 B1**
(45) Date de publication et mention de la délivrance du brevet: **26.09.2018**
(21) Numéro de dépôt: 17159049.0
(22) Date de dépôt: 03.03.2017
(51) Int. Cl.: B05B 12/12, B05B 12/08, B05B 13/04, B41J 3/407, B05B 1/16, B05C 11/10, B05D 1/28

(54) **APPLICATEUR DE PRODUIT DE REVETEMENT, ROBOT MULTIAXES COMPRENANT UN TEL APPLICATEUR ET PROCEDE D'APPLICATION D'UN PRODUIT DE REVETEMENT**
BESCHICHTUNGSVORRICHTUNG, MEHRACHSIGER ROBOTER MIT EINER SOLCHEN BESCHICHTUNGSVORRICHTUNG SOWIE ENTSPRECHENDES BESCHICHTUNGSVERFAHREN
COATING DEVICE, MUTLIAXIAL ROBOT PROVIDED WITH SUCH A COATING DEVICE AND CORRESPONDING COATING METHOD

(30) Priorité: 04.03.2016 FR 1651839
(43) Date de publication de la demande: 06.09.2017
(73) Titulaire: Exel Industries, 51200 Epernay (FR)
(72) Inventeur: MEDARD, Cyrille, 38760 Varces Allieres et Risset (FR); VINCENT, David, 38000 Grenoble (FR); LE STRAT, Cédric, 38170 Seyssinet Pariset (FR); BALLU, Patrick, 51100 Reims (FR)
(74) Mandataire: Lavoix

(56) Documents cités:
- EP-A1- 1 884 365
- EP-A1- 1 892 107
- EP-A1- 2 441 529
- EP-A2- 2 208 541
- EP-A2- 2 644 392
- DE-A1-102007 020 287
- DE-A1-102012 005 650
- US-A- 4 421 800
- US-A1- 2013 284 833

## Description

L'invention concerne un applicateur de produit de revêtement, un robot multiaxes muni de cet applicateur et un procédé d'application d'un produit de revêtement sur la surface d'une pièce, telle que le capot d'un véhicule automobile. En particulier, le procédé selon l'invention permet d'appliquer deux couches de produit de revêtement avec une jonction parfaite entre les deux couches.

Le document EP1892107 A1 divulgue un applicateur d'un produit de revêtement de l'art antérieur.

La tendance actuelle dans l'automobile, pour les véhicules de sport notamment, est celle des voitures personnalisables. Ainsi, les constructeurs automobiles proposent à leurs clients des voitures dont la peinture de la carrosserie peut être personnalisée. La carrosserie peut ainsi être multicolore, avec différents motifs, tels que des bandes. On observe souvent, sur les voitures de sport notamment, une ou plusieurs bandes de couleurs différentes qui s'étendent dans le sens longitudinal sur le capot de la voiture. Pour réaliser ce type de bandes, une technique connue consiste à appliquer un masque sur le reste de la carrosserie pour n'exposer que la surface du capot correspondant à une bande en cours d'application. En pratique, ce masque est réalisé avec du papier adhésif qui est retiré une fois le motif créé. Toutefois, cette technique est relativement pénible car elle nécessite d'appliquer manuellement un masque sur la carrosserie de chaque véhicule.

Une autre technique, décrite notamment dans US-A-2013/0284833, consiste à utiliser un robot multiaxes, comprenant un bras mobile sur lequel est monté un applicateur spécifique. Cet applicateur est une tête d'impression du type « ink jet » en anglais, qui comporte au moins une rangée de buses à travers lesquelles s'écoule le produit de revêtement. Une bande de peinture avec des bords nets peut alors être appliquée en déplaçant le bras du robot selon une direction perpendiculaire à la rangée de buses de la tête d'impression. Lorsque la largeur de la bande que l'on souhaite appliquer est supérieure à la largeur de la tête d'impression, le robot doit réaliser plusieurs allers-retours avec des trajectoires programmées pour que les bandes soient jointives, c'est-à-dire pour qu'il n'y ait pas de zone de non-recouvrement entre deux passages de la tête d'impression. US-A-2013/0284833 divulgue au paragraphe [0174] notamment que les buses de la tête d'impression permettent d'appliquer un revêtement avec une distribution d'épaisseur trapézoïdale, afin d'éviter les surépaisseurs lors du recouvrement et d'obtenir un revêtement d'épaisseur constante. Pour appliquer un bord net, comme représenté à la figure 21D de cette publication, certaines des buses de la tête d'impression sont désactivées lors du passage de l'applicateur.

Il est connu que les robots multiaxes ont des difficultés à suivre une trajectoire prédéterminée, par exemple en ligne droite. Ainsi, la trajectoire réelle décrite par le robot est inscrite dans un tube imaginaire, qui est centré sur la trajectoire théorique et dont le diamètre extérieur dépend de la précision du robot. On parle d'un phénomène de « tubing », lequel peut entrainer un défaut de recouvrement entre deux bandes de peinture au niveau de la jonction entre les deux bandes. Pour pallier ce problème, il est indiqué au paragraphe [0144] de US-A-2013/0284833 que l'applicateur comprend un capteur optique permettant d'enregistrer la ligne de déplacement de l'applicateur pour reproduire exactement la même course lors des passages ultérieurs de l'applicateur. La course du bras du robot est ainsi réglée par rapport au passage précédant pour obtenir une jonction parfaite entre les couches appliquées lors des deux passages successifs.

Un inconvénient de cette technologie est que la jonction n'est pas parfaite lorsque le revêtement est appliqué sur des surfaces bombées, comme le capot d'une voiture. On observe alors des zones de non recouvrement entre deux passages de l'applicateur.

C'est à ces inconvénients qu'entend plus particulièrement remédier l'invention en proposant un applicateur de produit de revêtement permettant d'obtenir une jonction parfaite entre deux bandes issues de deux passages successifs, même sur une surface bombée, comme le capot d'une voiture.

A cet effet l'invention concerne un applicateur d'un produit de revêtement sur une surface à revêtir, comprenant au moins une rangée de buses, parmi lesquelles au moins la première buse de la rangée comporte une vanne. Conformément à l'invention, l'applicateur comprend, en outre, au moins un capteur de distance, pour mesurer une distance d'application de la première buse à un point avancé par rapport à celle-ci sur un trajet de l'applicateur, et une unité électronique de commande de la vanne, qui est programmée pour collecter la distance mesurée par le capteur de distance, et, en fonction de la valeur de la distance collectée, pour ouvrir ou fermer la vanne. Chaque buse de la rangée comprend une vanne, alors que le capteur de distance est apte à mesurer la distance d'application de certaines buses au moins de la rangée à des points respectivement avancés par rapport à celles-ci sur le trajet de l'applicateur. Le capteur de distance est un capteur laser, comprenant une cellule émettrice d'un faisceau laser et une cellule réceptrice d'un faisceau laser réfléchi, alors que le capteur de distance est apte à balayer avec son faisceau une ligne perpendiculaire à la direction de déplacement de l'applicateur, de manière à mesurer la distance d'application de certaines buses au moins de la rangée, à des points avancés par rapport à celles-ci sur le trajet de l'applicateur.

Selon des aspects avantageux mais non obligatoires de l'invention, l'applicateur de produit de revêtement comprend l'une quelconque des caractéristiques suivantes, prises dans toute combinaison techniquement admissible :
- L'unité électronique de commande est programmée pour collecter les distances mesurées par le capteur de distance, afin de déterminer un profil de la surface à revêtir sur tout ou partie de la largeur d'application de l'applicateur, analyser le profil de surface pour détecter la position d'un bord d'une couche de produit de revêtement le long du profil de la surface, ouvrir toutes les vannes des buses qui sont disposées d'un côté du bord et fermer les vannes disposées de l'autre côté du bord le long du profil de la surface.
- Les vannes sont des vannes proportionnelles, alors que l'unité électronique de commande est programmée pour établir un profil d'épaisseur de la couche de produit de revêtement dans un plan perpendiculaire à la direction de déplacement de l'applicateur et pour contrôler le débit des vannes en fonction de l'épaisseur de la couche mesurée en chacun des points d'application des buses.
- Chaque buse de la rangée comprend une vanne et des capteurs de distance respectifs sont prévus pour mesurer une distance d'application de chaque buse à un point respectivement avancé par rapport à celles-ci sur le trajet de l'applicateur.
- Chaque vanne est une vanne piézoélectrique, dont le débit dépend d'une fréquence d'excitation de la vanne.
- L'unité électronique de commande est programmée pour fermer la vanne de la première buse lorsque la distance mesurée par le capteur est sensiblement supérieure à une valeur de référence.
- L'applicateur comprend en outre au moins un capteur de mesure d'épaisseur, configuré pour mesurer respectivement l'épaisseur du film de produit de revêtement appliqué par les buses en des points reculés par rapport à celles-ci sur le trajet de l'applicateur.
- L'applicateur comprend une autre rangée de buses, disposée en retard par rapport à chaque capteur de mesure d'épaisseur sur le trajet de l'applicateur.

L'invention concerne également un robot multiaxes, comprenant un bras mobile sur lequel est monté un applicateur tel que défini précédemment.

L'invention concerne aussi un procédé d'application d'un produit de revêtement sur la surface d'une pièce, ce procédé étant mis en oeuvre au moyen d'un applicateur comprenant au moins une rangée de buses, parmi lesquelles au moins la première buse de la rangée comporte une vanne, ce procédé comprenant des étapes consistant à :
a) déplacer l'applicateur selon une première direction pour appliquer une première couche de produit de revêtement, et à
b) déplacer l'applicateur selon une deuxième direction sensiblement parallèle à la première direction pour appliquer une seconde couche de produit de revêtement de manière jointive à la première couche.

Conformément à l'invention, l'étape b) comprend des sous-étapes consistant à mesurer au moins une distance d'application de la première buse à un point avancé par rapport à celle-ci sur un trajet de l'applicateur, et en fonction de la distance d'application mesurée, à ouvrir ou fermer la vanne.

Selon des aspects avantageux, mais non obligatoires, le procédé comprend une ou plusieurs des caractéristiques suivantes, prises dans toute combinaison techniquement admissible :
- La sous-étape b1) consiste à collecter des distances d'application de certaines buses au moins de la rangée à des points respectivement avancés par rapport à celles-ci sur le trajet de l'applicateur, afin de déterminer un profil de la surface à revêtir sur tout ou partie de la largeur d'application de l'applicateur, alors que la sous-étape b2) consiste à analyser le profil de surface pour détecter la position d'un bord de la première couche de produit de revêtement le long du profil de la surface et à ouvrir toutes les vannes des buses qui sont disposées d'un côté du bord et fermer les vannes disposées de l'autre côté du bord le long du profil de la surface.
- Les vannes sont des vannes proportionnelles et l'étape b) comprend d'autres sous-étapes consistant à établir un profil d'épaisseur de la couche de produit de revêtement le long de l'axe, et à contrôler le débit des vannes en fonction de l'épaisseur de la couche en chacun des points avancés.
- Le procédé comprend en outre une étape consistant à repositionner l'applicateur lorsque la surface est verticale ou inclinée. Cette étape de repositionnement consiste à déplacer l'applicateur avec une certaine amplitude et selon une direction parallèle à un axe de la rangée de buses pour compenser la déviation du produit de revêtement due à la gravité.
- L'amplitude de déplacement de l'applicateur lors de l'étape de repositionnement est calculée dynamiquement en fonction de l'inclinaison de l'applicateur par rapport au sol, de la distance d'application des buses, de la vitesse d'éjection du produit à travers les buses et de la taille des buses ou est extraite d'un abaque préenregistré.
- Le procédé comprend en outre une étape consistant à fermer la vanne de la ou des buses susceptibles de projeter, à cause de la gravité, du produit de revêtement sur une zone de la surface recouverte par la première couche de produit de revêtement.
- Les vannes sont des vannes proportionnelles et l'étape b) comprend en outre les sous-étapes suivantes: i) évaluer l'inclinaison de la portion de surface (Sk) destinée à être recouverte par chaque buse par rapport à un plan perpendiculaire à un axe de pulvérisation des buses, et ii) contrôler le débit de produit de revêtement appliqué par chaque buse en fonction de l'inclinaison de la portion de surface (Sk) destinée à être recouverte par la buse correspondante.

Si, lors de l'étape b), le robot suit sa trajectoire de consigne, la distance mesurée par le capteur de distance à un point avancé par rapport à la première buse sur le trajet de l'applicateur est sensiblement inférieure à une valeur de référence, laquelle correspond à la distance d'application des buses lorsqu'il n'y a pas de produit de revêtement. Cela signifie que la zone d'application de la première buse à un point avancé sur le trajet de l'applicateur est déjà recouverte de produit de revêtement. Grâce à l'invention, la vanne de la première buse est fermée et aucun produit de revêtement n'est appliqué par la première buse lorsque celle-ci parvient au point avancé, ce qui permet d'éviter une surépaisseur au niveau de la jonction entre les deux bandes

En revanche, si le robot dévie d'une trajectoire de consigne, par exemple à cause du phénomène de « tubing », la distance mesurée par le capteur à un point avancé par rapport à la première buse sur le trajet de l'applicateur est sensiblement égale à la valeur de référence. Cela signifie que la zone d'application de la première buse à un point avancé sur le trajet de l'applicateur n'est pas recouverte de produit de revêtement. Grâce à l'invention, la vanne de la première buse est ouverte. La première buse revêt alors la surface lorsqu'elle parvient au point avancé sur le trajet de l'applicateur. Cela permet d'éviter les zones de non recouvrement et d'obtenir une jonction parfaite entre les deux couches de produit de revêtement. La vanne de la première buse est donc contrôlée de manière dynamique, c'est-à-dire en temps réel, sur le trajet de l'applicateur. Ce réglage dynamique permet d'appliquer une bande de produit de revêtement avec une jonction parfaite par rapport à une autre bande existante, même sur une surface bombée telle que la surface d'un capot de voiture. La jonction entre deux bandes de peinture est donc assurée par le pilotage dynamique de la vanne, sans utiliser un robot ultra-précis ni un contrôleur de trajectoire perfectionné.

L'invention et d'autres avantages de celle-ci apparaîtront plus clairement à la lumière de la description qui va suivre de sept modes de réalisation d'un applicateur de produit de revêtement conforme à son principe, donnée uniquement à titre d'exemple et faite en référence aux dessins annexés dans lesquels :
- la figure 1 est une représentation schématique d'un robot multiaxes comprenant un bras mobile sur lequel est monté un applicateur de produit de revêtement conforme à l'invention,
- la figure 2 est une vue partielle en élévation dans le sens de la flèche II à la figure 1, représentant l'applicateur de produit de revêtement dans une configuration où il effectue un premier passage sur une surface à revêtir, de manière à former une première bande,
- la figure 3 est une vue analogue à la figure 2, représentant l'applicateur de produit de revêtement dans une configuration où il effectue un second passage sur la surface à revêtir, de manière à appliquer une seconde bande jointive à la première bande,
- la figure 4 est une vue en coupe schématique de l'applicateur selon la ligne IV-IV de la figure 3,
- la figure 5 est une coupe schématique de l'applicateur selon la ligne V-V de la figure 3,
- la figure 6 est une vue analogue à la figure 3, dans laquelle l'applicateur est conforme à un deuxième mode de réalisation de l'invention,
- la figure 7 est une coupe schématique selon la ligne VII-VII de la figure 6,
- la figure 8 est un schéma relatif à un troisième mode de réalisation d'un applicateur selon l'invention,
- les figures 9 et 10 sont des vues analogues à la figure 3 et représentent un applicateur de produit de revêtement conforme à un quatrième mode de réalisation, dans une configuration où il effectue un passage le long d'un bord d'une surface à revêtir,
- la figure 11 est une coupe schématique de l'applicateur de produit de revêtement dans le plan XI-XI de la figure 10,
- la figure 12 est une vue analogue à la figure 3 représentant un applicateur de produit de revêtement conforme à un cinquième mode de réalisation de l'invention,
- la figure 13 est une vue analogue à la figure 4 pour un applicateur de produit de revêtement conforme à un sixième mode de réalisation de l'invention, cet applicateur étant conçu pour compenser en outre l'effet de la gravité, et
- la figure 14 est une vue analogue à la figure 4 pour un applicateur de produit de revêtement conforme à un septième mode de réalisation de l'invention, cet applicateur étant conçu pour obtenir un recouvrement irréprochable, même sur une surface gauche.

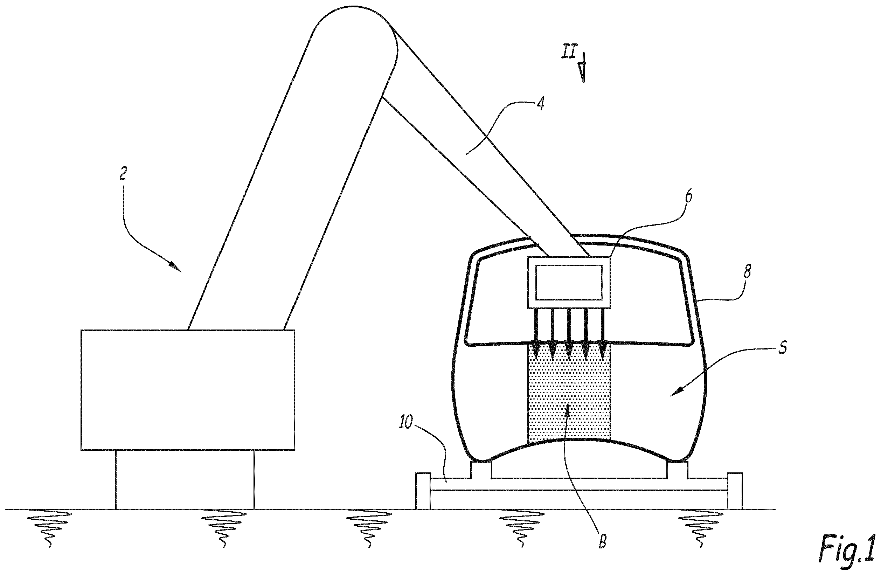

Sur la figure 1 est représenté un robot multiaxes 2 comprenant un bras mobile 4 sur lequel est monté un applicateur 6 de produit de revêtement. L'applicateur 6 est une tête d'impression de type « ink jet » en Anglais. Dans l'exemple, le produit de revêtement considéré est de la peinture, mais il peut également s'agir d'un apprêt, d'une encre ou encore d'un vernis. Le robot multiaxes 2 est disposé sur le côté d'un convoyeur 10 déplaçant des carrosseries 8 de véhicule automobile. Dans l'exemple, le robot multiaxes 2 est conçu pour appliquer une bande de peinture B sur la surface S du capot de chaque carrosserie 8 déplacée par le convoyeur 10. Le robot 2 comprend un contrôleur non représenté, programmé pour contrôler le bras 4 de manière à effectuer une trajectoire de consigne.

L'applicateur de produit de revêtement 6 comprend une rangée de buses, référencées 60.1 à 60.i sur les figures, i étant le nombre de buses de la rangée, qui est supérieur ou égal à 2 et par exemple compris entre 10 et 100. Les buses 60.1 à 60.i de la rangée sont disposées de manière perpendiculaire à la direction de déplacement de l'applicateur 6 lors de l'application du produit de revêtement. Dans l'exemple, les buses 60.1 à 60.i sont configurées pour déposer le produit de revêtement goutte par goutte. Une fois déposée, la goutte s'étale sur la surface à revêtir. On définit un coefficient d'étalement comme le rapport entre l'aire de la surface revêtue une fois la goutte étalée et le diamètre de la goutte. Ce coefficient d'étalement dépend notamment du type de produit de revêtement utilisé. Il est compris entre 5 et 10, souvent de l'ordre de 7.

De manière alternative, les buses peuvent être conformées pour former un filet continu de produit de revêtement.

Avantageusement, les buses 60.1 à 60.i sont des trous pratiqués dans une plaque, la largeur des gouttes ou du filet correspondant alors à la largeur des trous.

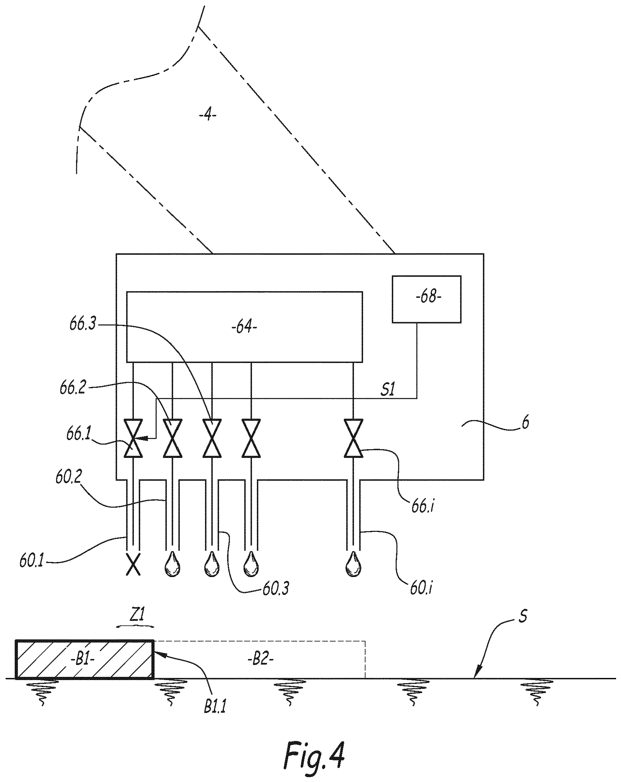

Comme visible à la figure 4, chaque buse 60.1 à 60.i de la rangée comprend une vanne, respectivement 66.1 à 66.i. Les vannes 66.1 à 66.i de l'applicateur 6 sont chacune reliées à un réservoir commun 64 de produit de revêtement. Les vannes 66.2 à 66.i sont optionnelles pour la réalisation de l'invention.

Dans l'exemple, les vannes 66.1 à 66.i sont des vannes à commande électrique, notamment des vannes piézoélectriques.

Les vannes piézoélectriques sont des vannes dites excitatrices, comprenant un élément piézoélectrique déformable sous l'application d'une excitation électrique. Ce type de vanne fonctionne de la manière suivante. Lorsque l'élément piézoélectrique n'est pas excité, le fluide reste à l'intérieur du réservoir 64 du fait que la pression atmosphérique est supérieure à la pression du réservoir. En revanche, lorsque l'élément piézoélectrique est excité, par exemple avec une tension alternative, celui-ci génère alors localement une surpression permettant au fluide de s'écouler hors du réservoir.

Le débit de produit de revêtement éjecté à travers les buses 60.1 à 60.i peut être réglé en agissant sur la fréquence d'excitation des vannes respectives 66.1 à 66.i. On parle alors de vannes proportionnelles.

Dans le présent document, on appelle vanne tout dispositif permettant de contrôler l'écoulement du produit de revêtement. En particulier, selon une variante non représentée, les vannes 66.1 à 66.i sont des vannes dites à obturateur, qui fonctionnent par obturation sélective du conduit de passage du fluide.

Selon une autre variante non représentée, un autre type de vanne excitatrice peut être envisagé pour équiper l'applicateur 6. Il peut s'agir d'une vanne avec une excitation de type thermique, acoustique, pneumatique ou encore électrostatique.

L'applicateur 6 comprend des capteurs de distance 62.1 à 62.i qui sont positionnés à des points avancés par rapport aux buses 60.1 à 60.i sur le trajet de l'applicateur 6. Les capteurs 62.1 à 62.i sont agencés sous forme de rangée, laquelle est parallèle à la rangée de buses 60.1 à 60.i. L'applicateur 6 comporte autant de capteurs de distance 62.1 à 62.i que de buses 60.1 à 60.i. Chaque capteur 62.1 à 62.i est donc associé à une buse. Par exemple, le capteur 62.1 est associé à la buse 60.1. Ainsi, la position des capteurs 62.1 à 62.i le long du trajet de l'applicateur 6 à un instant t correspond à celle des buses 60.1 à 60.i à l'instant t+Δt, où Δt est une durée qui dépend de la vitesse de déplacement de l'applicateur 6 et de la distance d6 entre la rangée de buse 60.1 à 60.i et la rangée de capteurs 32.1 à 62.i, mesurée parallèlement à la direction de déplacement de l'applicateur 6. Les capteurs de distance 62.2 à 62.i sont optionnels pour la réalisation de l'invention.

Les capteurs de distances 62.1 à 62.i mesurent, à chaque instant t, la distance entre l'applicateur 6 et la portion de la surface à revêtir S qui se trouve en regard d'eux. Or, à l'instant t+Δt, les buses 62.1 à 62.i atteignent la position des capteurs 60.1 à 60.i à l'instant t. La distance mesurée par les capteurs 62.1 à 62.i à l'instant t correspond donc respectivement à la distance d'application des buses 60.1 à 60.i à l'instant t+Δt, c'est-à-dire à la distance entre les buses et la pièce à revêtir, mesurée selon une direction parallèle à un axe de projection du produit de revêtement à travers les buses. Chaque capteur de distance 62.1 à 62.i mesure donc la distance d'application de la buse à laquelle il est associé à un point, sur le trajet de l'applicateur 6, qui est avancé par rapport à la buse 60.1 à 60.i qui lui est associée.

Avantageusement, chaque capteur de distance 62.1 à 62.i est un capteur laser, comprenant une cellule émettrice d'un faisceau laser et une cellule réceptrice d'un faisceau laser réfléchi, sur la surface S. Le faisceau laser émis par la cellule émettrice est sensiblement parallèle à l'axe de projection du produit de revêtement à travers les buses 60.1 à 60.i. Dans l'exemple, la précision de chaque capteur est inférieure à 10 µm, notamment de l'ordre de 1 µm.

L'applicateur 6 comprend en outre une unité électronique de commande 68. L'unité électronique de commande 68 contrôle l'ouverture et la fermeture de chacune des vannes 66.1 à 66.i. Pour ce faire, l'unité 68 envoie à chacune des vannes 66.1 à 66.i des signaux de commande, parmi lesquels le signal électrique S1 de commande de la vanne 66.1 est représenté schématiquement à la figure 4. En fonction du signal reçu, la vanne 66.1 s'ouvre ou se ferme. Chaque capteur de distance 62.1 à 62.i est connecté à l'unité 68. L'unité électronique de commande 68 peut donc collecter la distance mesurée par les capteurs à chaque instant t. L'unité électronique de commande 68 est apte à comparer la distance mesurée par chacun des capteurs 62.1 à 62.i avec une valeur de référence D. Cette valeur de référence D correspond à la distance entre les buses 60.1 à 60.i et la surface à revêtir S lorsque celle-ci n'est pas recouverte de produit de revêtement. Autrement dit, la valeur de référence D correspond à la distance d'application des buses 60.1 à 60.i.

Dans l'exemple, cette valeur de référence D est une valeur prédéterminée qui est identique pour toutes les buses 60.1 à 60.i. En outre, c'est une valeur constante dans le temps, c'est-à-dire que la même distance d1 est utilisée quelle que soit la position de l'applicateur 6 sur son trajet. La distance d1 peut alors être préenregistrée en mémoire dans l'unité électronique de commande 68.

Cependant, à titre de variante, la valeur de référence D est propre à chaque buse et/ou n'est pas une fonction constante dans le temps, c'est-à-dire que cette valeur de référence D varie selon la position de l'applicateur 6 sur son trajet. Cette variante est avantageuse lorsque la surface à revêtir est gauche, c'est-à-dire lorsque la distance d'application varie sensiblement d'une buse à l'autre et/ou varie sensiblement sur le trajet de l'applicateur 6. Dans ce cas, la distance D à laquelle est comparée la distance transmise par les capteurs à chaque instant peut être acquise par apprentissage, en déplaçant l'applicateur 6 une première fois « à blanc », c'est-à-dire sans appliquer de produit de revêtement. Les valeurs acquises par les capteurs 62.1 à 62.i lors de l'apprentissage servent alors de distances de référence, au même titre que la valeur de référence D.

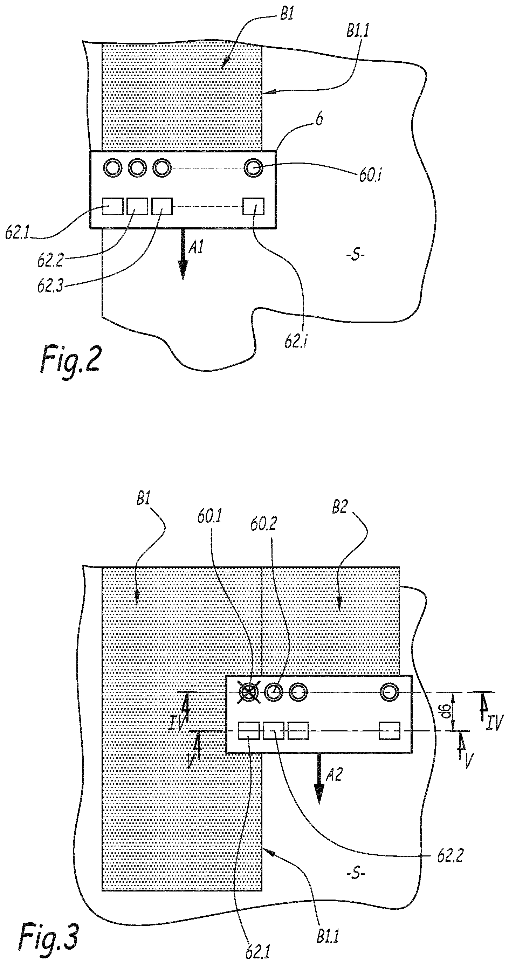

Un procédé d'application d'un revêtement B sur une surface à revêtir S est décrit ci-dessous en relation avec les figures 2 à 5. Ce procédé est effectué par l'applicateur 6 décrit ci-dessus. Dans l'exemple, la surface S à revêtir est le capot d'une voiture 8. Le revêtement B visible à la figure 1 est formé par deux couches B1 et B2 de produit de revêtement. Dans l'exemple, les couches de produit B1 et B2 sont des bandes s'étendant dans le sens longitudinal du capot. Les bandes B1 et B2 sont appliquées de manière jointive, c'est-à-dire de façon à ce qu'il n'y a pas de zone de non recouvrement entre les bandes B1 et B2.

La figure 2 illustre une étape a) durant laquelle l'applicateur 6 effectue un premier passage pour appliquer une première bande B1 sur la surface à revêtir S. La direction de déplacement de l'applicateur 6 est représentée à la figure 2 par une flèche A1. La direction de déplacement A1 correspond en fait au vecteur directeur de la ligne de déplacement de l'applicateur 6. Ce vecteur est à chaque instant parallèle à la surface à revêtir. Ainsi, si la surface à revêtir est un plan, la ligne de déplacement de l'applicateur est une ligne droite. En revanche, si la surface à revêtir est bombée, la ligne de déplacement de l'applicateur est une courbe, avec un rayon de courbure sensiblement égal à celui de la surface bombée.

La figure 3 illustre une étape b) durant laquelle l'applicateur 6 effectue un second passage pour appliquer une seconde bande B2 de manière jointive à la première bande B1. Pour cela, la direction de déplacement de l'applicateur 6 lors de ce second passage, qui est représentée à la figure 3 par une flèche A2, est sensiblement parallèle à la direction de déplacement A1 de l'applicateur lors du premier passage. Ainsi, si la ligne de déplacement de l'applicateur 6 lors du premier passage est une première courbe, la ligne de déplacement de l'applicateur lors du second passage est une seconde courbe parallèle à la première courbe. Tout plan normal à une courbe parmi la première et la seconde courbe est alors également un plan normal à l'autre, la distance entre deux points respectifs des deux courbes qui sont contenus dans ce plan normal étant sensiblement constante. Ces deux courbes peuvent donc être vues comme deux rails d'une voie ferrée reliés par des traverses de longueur constante, les traverses restant toujours orthogonales aux rails.

Lors du deuxième passage, l'applicateur 6 est déplacé, lors de l'étape b), comme pour recouvrir partiellement la première bande B1, c'est-à-dire comme pour recouvrir le bord B1.1 de la première bande B1 destiné à être jointif avec la seconde bande B2. On force ainsi le recouvrement. Ceci est particulièrement visible à la figure 3, où l'on voit que l'applicateur 6 déborde légèrement sur la première bande B1. Si toutes les vannes 66.1 à 66.i étaient ouvertes lors du deuxième passage de l'applicateur 6, la première bande B1 serait alors recouverte sur une certaine largeur. Dans l'exemple, la largeur de recouvrement, correspond approximativement à la largeur de la surface recouverte par une goutte issue de la première buse une fois que celle-ci s'est étalée. En variante, la largeur de recouvrement peut être la surface recouverte après étalement par plusieurs buses, notamment quatre ou cinq buses successives. En pratique, la largeur de recouvrement dépend de plusieurs paramètres liés à l'imprécision du robot, au phénomène de « tubing », aux problèmes de répétabilité ou encore aux tolérances des jets. La largeur de recouvrement est comprise approximativement entre 1 mm et 5 mm.

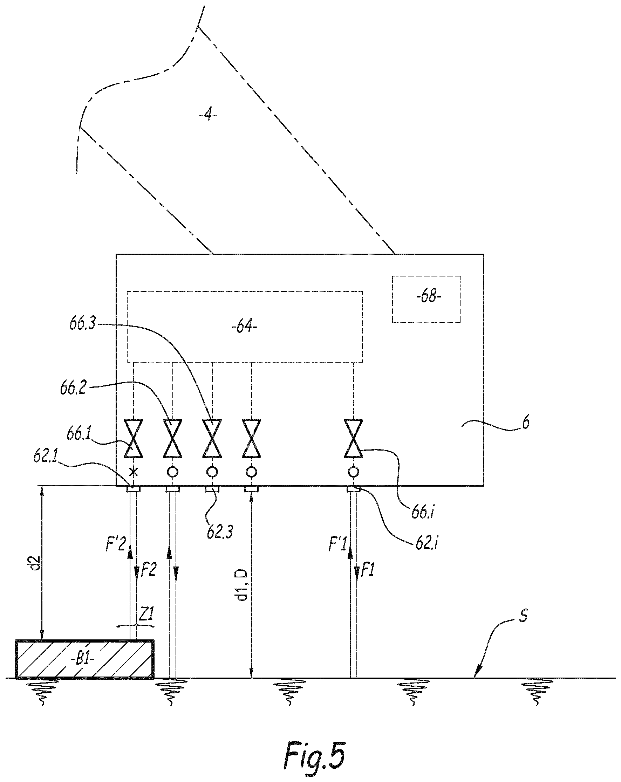

Comme visible à la figure 5, lors d'une sous-étape b1) de l'étape b), le capteur de distance 62.1 mesure, à un instant t, la distance qui le sépare de la surface à revêtir S. Comme expliqué ci-dessus, cette distance mesurée correspond à la distance d'application de la buse 60.1 à l'instant t+Δt. Lors de la sous-étape b1), le capteur de distance 62.1 mesure donc la distance d'application de la buse 30.1 à un point avancé par rapport à celle-ci sur le trajet de l'applicateur 6.

L'unité électronique de commande 68 collecte alors la distance mesurée par le capteur 62.1 et compare, lors d'une sous-étape b2) cette distance avec la valeur de référence D.

On définit une zone d'application d'une buse comme une portion de la surface à revêtir destinée à être recouverte de produit de revêtement par la buse. Autrement dit, au sens de la présente demande, la zone d'application d'une buse n'est pas la zone que la buse est capable de revêtir à l'instant t, mais la zone que la buse sera capable de revêtir à l'instant t+Δt sur la trajectoire de l'applicateur 6.

Si le robot suit sa trajectoire de consigne, la distance mesurée par le capteur de distance 62.1 à un point avancé par rapport à la première buse 60.1 sur le trajet de l'applicateur est sensiblement inférieure à la valeur de référence D. Cela signifie que la zone d'application de la première buse à un point avancé sur le trajet de l'applicateur est déjà recouverte de produit de revêtement. La vanne 66.1 de la première buse 60.1 est alors fermée lors d'une sous étape b3) du procédé de l'invention et aucun produit de revêtement n'est appliqué par la première buse 60.1 lorsque celle-ci parvient au point avancé, c'est-à-dire à l'instant t+Δt. On évite ainsi une surépaisseur au niveau de la jonction entre les deux bandes B1 et B2.

Lors du fonctionnement de l'applicateur 6, l'unité électronique de commande 68 considère que la valeur mesurée par un capteur est sensiblement inférieure à la valeur de référence D lorsque la différence entre les deux valeurs, représentant l'épaisseur réelle du produit de revêtement déposé sur la surface S, est inférieure à 50% de l'épaisseur théorique mouillée. L'épaisseur théorique mouillée correspond à l'épaisseur du produit de revêtement sur la surface S que l'on souhaite déposer avant séchage. Par exemple, l'unité électronique de commande 68 peut considérer que la valeur mesurée par le capteur est sensiblement inférieure à la valeur de référence D lorsque la différence entre les deux valeurs est inférieure à 20 µm.

En revanche, si lors de l'étape b), le robot dévie de sa trajectoire de consigne, la distance mesurée à l'étape b1) par le capteur de distance 62.1 à un point avancé par rapport à la première buse 60.1 sur le trajet de l'applicateur 6 est sensiblement égale la valeur de référence D. Cela signifie que la zone d'application de la première buse 60.1 à un point avancé sur le trajet de l'applicateur 6 n'est pas recouverte de produit de revêtement. Dans ce cas, la vanne 66.1 de la première buse 60.1 est ouverte. La première buse revêt alors la surface S lorsqu'elle parvient au point avancé sur le trajet de l'applicateur, c'est-à-dire à l'instant t+Δt. Cela permet d'éviter les zones de non recouvrement entre les bandes B1 et B2 et d'obtenir une jonction parfaite entre les deux couches de produit de revêtement B1 et B2.

Les étapes mentionnées ci-dessus sont réitérées, à chaque instant au fur et à mesure du déplacement de l'applicateur 6, c'est-à-dire de manière dynamique, avec une périodicité de l'ordre de 1 ms.

Dans la configuration de la figure 5, la zone Z1 d'application de la buse 60.1 est recouverte par la bande B1 appliquée lors du premier passage de l'applicateur 6. Ainsi, le faisceau laser F2 émis par le capteur 62.1 est réfléchi par la bande de revêtement B1 en un faisceau laser F'2, lequel est reçu par la cellule réceptrice du capteur 62.1. Le temps écoulé entre l'émission du faisceau laser et la réception du faisceau laser réfléchi est représentatif de la distance d2 entre le capteur 62.1 et la couche de revêtement B1. Le capteur 62.1 communique la distance d2 à l'unité 68, qui la compare avec la valeur de référence D. La distance d2 étant inférieure à la distance D, l'unité électronique de commande 68 ferme la vanne 66.1 de la buse 60.1, comme symbolisé à la figure 4 par une croix.

En revanche, le faisceau laser F1 émis par les autres capteurs 62.2 à 62.i est réfléchi en un faisceau laser F'1 directement par la surface S à revêtir. La distance d1 mesurée par les capteurs 62.2 à 62.i correspond donc sensiblement à la valeur de référence D mentionnée ci-dessus. L'unité électronique de commande 68 ne ferme donc pas les vannes 66.2 à 66.i correspondantes, comme symbolisé par les gouttes de produit à la figure 4. La deuxième bande B2 a donc une largeur plus faible que celle de la première bande B1.

Avantageusement, les capteurs de distance 62.1 à 62.i mesurent, à chaque instant t, la distance d'application de chacune des buses 60.1 à 60.i à l'instant t+Δt. L'unité électronique de commande 68 compare alors chacune des valeurs mesurées par les capteurs 62.1 à 62.i avec la valeur de référence D. L'unité électronique de commande 68 ferme alors toutes les vannes pour lesquelles la distance mesurée par les capteurs correspondants est inférieure à la valeur de référence D et ouvre les autres vannes, c'est-à-dire toutes les vannes pour lesquelles la distance mesurée par les capteurs correspondants est sensiblement égale à la valeur de référence D.

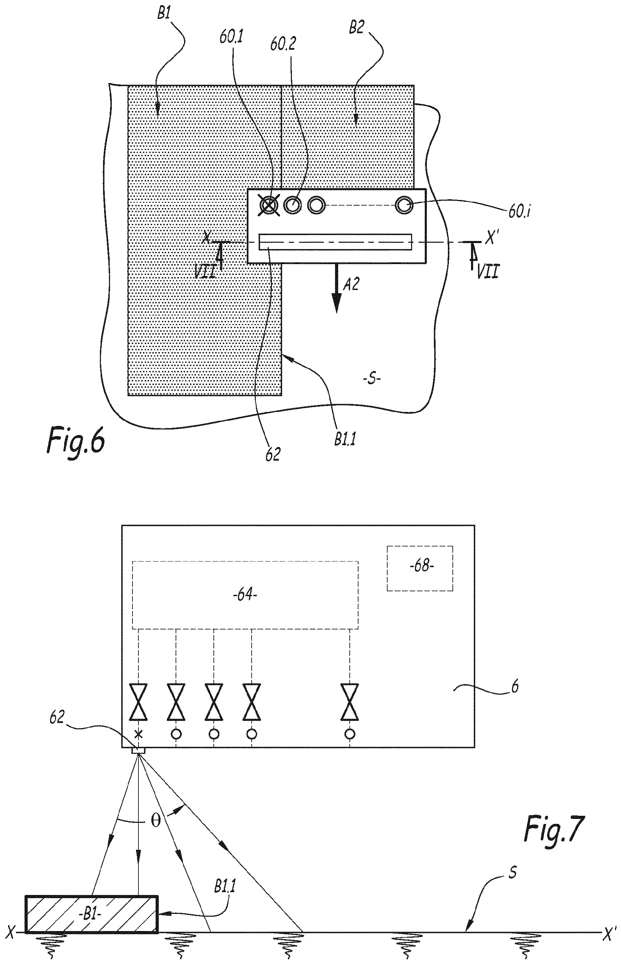

Sur les figures 6 à 8 sont représentés un deuxième mode de réalisation et un troisième mode de réalisation d'un applicateur 6 conforme à l'invention. Dans ce qui suit, seules les différences par rapport au premier mode de réalisation sont mentionnées, par souci de concision. De plus, tous les éléments de l'applicateur 6 conservent leur référence numérique.

Dans le deuxième mode représenté aux figures 6 et 7, l'applicateur 6 ne comprend qu'un seul capteur de distance 62, qui est disposé du côté de la première buse 60.1. Ce capteur de distance 62 diffère des capteurs de distance 62.1 à 62.i en ce qu'il est apte à balayer avec son faisceau laser une ligne s'étendant dans un plan perpendiculaire à la direction de déplacement de l'applicateur 6. L'angle de balayage θ du capteur 62 est tel que le capteur de distance 62 est apte à déterminer le profil de distance des buses 60.1 à 60.i, c'est-à-dire à mesurer la distance d'application de plusieurs buses successives en des points avancés par rapport à celles-ci sur le trajet de l'applicateur 6.

Avantageusement, l'angle de balayage θ du capteur 62 est tel que le capteur de distance 62 est apte à mesurer la distance d'application de chacune des buses 60.1 à 60.i en des points avancés par rapport à celles-ci sur le trajet de l'applicateur 6.

Par exemple, l'angle de balayage θ du capteur 62 peut être compris entre 10° et 120°, de préférence de l'ordre de 90°.

Un avantage de ce deuxième mode est que l'on utilise un seul capteur de distance pour l'ensemble des buses, ce qui limite le coût de l'applicateur 6.

Le procédé d'application du produit de revêtement au moyen de l'applicateur 6 selon ce deuxième mode de réalisation diffère du procédé décrit ci-dessus en relation avec le mode de réalisation des figures 1 à 5 sur les points suivants.

Lors de la sous-étape b1), le capteur de distance 62 mesure la distance d'application de chacune des buses 60.1 à 60.i en des points avancés par rapport à celles-ci sur le trajet A2 de l'applicateur 6. L'unité électronique de commande 68 collecte alors ces valeurs auprès du capteur 62.

Sur la base des distances mesurées par le capteur de distance 62, l'unité électronique de commande 68 établit un profil de surface sur tout ou partie de la largeur d'application de l'applicateur 6, et donc un profil d'épaisseur du revêtement appliqué sur la surface. Le profil de surface de la pièce correspond à l'intersection entre la surface S à revêtir dans un plan perpendiculaire à la direction de déplacement de l'applicateur 6. Ce qu'on appelle profil de surface est donc en réalité une ligne.

Pour un procédé de recouvrement, c'est-à-dire consistant à appliquer deux couches de produit de revêtement de manière jointive, ce profil d'épaisseur correspond approximativement à une fonction échelon avec une valeur d'échelon correspondant à l'épaisseur de la couche de produit de revêtement B1 appliqué sur la surface. L'unité électronique de commande est capable, en analysant les valeurs de distances mesurées par le capteur 62, de déterminer la position du bord B1.1 de la première bande B1 le long du profil de surface.

Dans l'exemple considéré, la surface est plane, si bien que le profil de surface peut être assimilé à une droite X-X' perpendiculaire à la direction de déplacement de l'applicateur 6 et perpendiculaire à un axe de pulvérisation des buses 60.1 à 60.i. On parle d'un front d'épaisseur.

La position du bord B1.1 correspond à la position du point à partir duquel on observe une variation nette de distance mesurée par le capteur 62, cette variation étant due à la présence de la couche de produit de revêtement B1. La sensibilité du capteur de distance 62 est telle que l'unité électronique de commande est capable de détecter le front d'épaisseur quelle que soit la géométrie de surface à revêtir, c'est-à-dire même pour une surface gauche. En effet, la précision du capteur 62 est inférieure à 10 µm, notamment de l'ordre de 1 µm.

Ainsi, l'unité électronique de commande 68 ferme toutes les vannes qui sont disposées d'un premier côté du bord B1.1 et ouvre les vannes qui sont disposées du deuxième côté du bord B1.1. Le premier côté du bord B1.1 correspond au côté où la surface S est revêtue de produit à gauche du bord B1.1 à la figure 7, alors que le deuxième côté du bord B1.1 correspond au côté où la surface S est dénuée de produit de revêtement, à droite du bord B1.1 à la figure 7. Par exemple, si la position du bord B1.1 le long de l'axe X-X' déterminée par l'unité électronique de commande 68 est entre les points d'application des buses 60.2 et 60.3, l'unité électronique de commande 68 ferme les vannes des buses 60.1 et 60.2 et ouvre les autres vannes.

Lors du second passage de l'applicateur 6, le produit de revêtement n'est donc déposé qu'aux endroits de la surface S qui ne sont pas recouverts par la bande B1. On peut ainsi compenser un défaut de trajectoire du robot et assurer une jonction parfaite entre les deux bandes B1 et B2, sans surépaisseur.

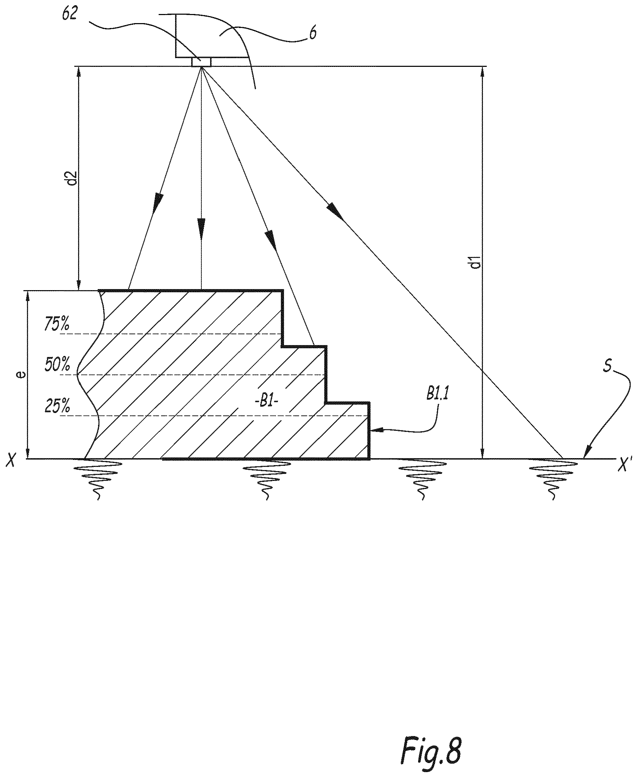

Dans le troisième mode, expliqué ci-après en relation avec la figure 8, l'applicateur 6 comprend des vannes 66.1 à 66.i à débit contrôlable, ou vannes proportionnelles. Dans l'exemple, les vannes 66.1 à 66.i sont des vannes piézoélectriques dont la fréquence d'excitation peut être ajustée en fonction du débit souhaité.

En variante, les vannes 66.1 à 66.i sont des électrovannes de type à obturateur. Le débit des vannes est alors contrôlé en ajustant la fréquence d'ouverture des vannes. Selon une autre variante, on peut également utiliser des vannes à débit variable.

A partir des valeurs de distance mesurées par le capteur 62, l'unité électronique de commande 68 établit un profil d'épaisseur de la couche de produit de revêtement dans un plan perpendiculaire à la direction de déplacement de l'applicateur et contrôle le débit des vannes 66.1 à 66.i en fonction de l'épaisseur de la couche mesurée en chacun des points d'application des buses. Plus précisément, l'épaisseur de la couche est comparée en chaque point avec l'épaisseur théorique de la couche de produit de revêtement, cette épaisseur théorique étant enregistrée en mémoire dans l'unité électronique de commande.

Si par exemple, l'épaisseur calculée par l'unité 68 en un point est comprise entre 0 et 25% de l'épaisseur maximale e, le débit de la vanne correspondante correspond à 100% du débit maximal. En revanche, si l'épaisseur calculée par l'unité 68 en un point est comprise entre 25% et 50% de l'épaisseur théorique, le débit de la vanne correspondante correspond à 75% du débit maximal. Si l'épaisseur calculée par l'unité 68 en un point est comprise entre 50% et 75% de l'épaisseur théorique, le débit de la vanne correspondante correspond à 50% du débit maximal. Enfin, si l'épaisseur calculée par l'unité 68 en un point est comprise entre 75% et 100% de l'épaisseur théorique, la vanne correspondante est fermée.

L'applicateur 6 conforme au troisième mode de réalisation a pour avantage que si le bord B1.1 de la bande B1 n'est pas un bord net, par exemple à cause de l'étalement du produit de revêtement, le débit des vannes appartenant aux buses agencées pour appliquer du produit de revêtement sur le bord B1.1 est contrôlé pour pallier le manque d'épaisseur au niveau de la jonction.

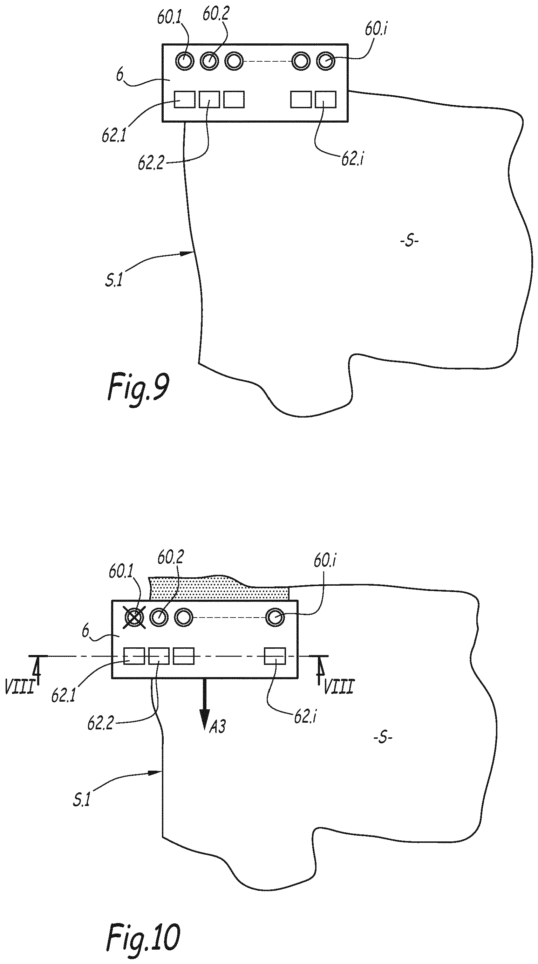

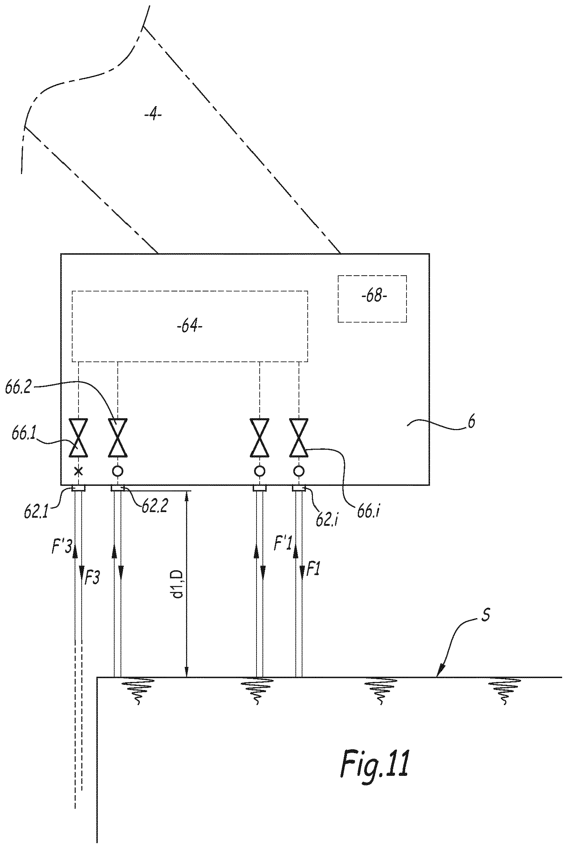

Sur les figures 9 à 12 sont représentés un quatrième mode de réalisation et un cinquième mode de réalisation d'un applicateur 6 conforme à l'invention. Dans ce qui suit, seules les différences par rapport au premier mode de réalisation sont mentionnées, par souci de concision. De plus, tous les éléments de l'applicateur 6 conservent leur référence numérique.

L'applicateur 6 des figures 9 à 11, conforme au quatrième mode de réalisation, diffère de celui du premier mode de réalisation par la programmation de l'unité électronique de commande 68. Cette programmation particulière de l'unité 68 vise à éviter de gaspiller du produit de revêtement en appliquant du produit de revêtement dans le vide. Cette programmation est avantageuse dans le cas où l'applicateur 6 est utilisé pour peindre une surface délimitant le bord d'une pièce, comme par exemple un bord longitudinal du toit d'une voiture.

Dans la suite de la description, on considère que l'applicateur 6 est orienté de telle sorte que la première buse 60.1 est la buse de la rangée la plus proche du bord S.1 de la surface à revêtir S. Lors de l'application du produit de revêtement, l'applicateur 6 est déplacé le long du bord de la pièce à revêtir, comme représenté par la flèche A3 à la figure 9. Le capteur 62.1 associé à la première buse 60.1 mesure alors, à chaque instant t, la distance qui le sépare du premier objet sur lequel le faisceau F3 qu'il émet est réfléchi. Pour cela, il évalue le temps entre l'émission du faisceau laser F3 et la réception du faisceau laser réfléchi F'3. Cette distance correspond à la distance d'application de la première buse 60.1 à un instant t+Δt.

Si cette distance est sensiblement supérieure à la valeur de référence D, cela signifie que, à l'instant t+Δt, la pièce à revêtir ne sera pas dans le champ d'application de la buse 60.1. L'unité électronique de commande 68 ferme alors la vanne 66.1 de la première buse 60.1 pour ne pas appliquer de produit de revêtement à travers la buse 60.1 à l'instant t+Δt et éviter ainsi de gaspiller du produit de revêtement. Dans ce deuxième mode de réalisation, les capteurs 62.2 à 62.i et les vannes 66.2 à 66.i sont également optionnels pour la réalisation de l'invention.

Avantageusement, les capteurs de distance 62.1 à 62.i mesurent en dynamique la distance d'application de chacune des buses 60.1 à 60.i à un point avancé sur le trajet de l'applicateur 6. Le robot 2 détermine donc, en temps réel, si la distance mesurée par chacun des capteurs 62.1 à 62.i est supérieure à la valeur de référence D. L'unité électronique de commande 68 ferme alors toutes les vannes pour lesquelles la distance mesurée par les capteurs correspondants dépasse sensiblement la valeur de référence D et ouvre les autres vannes, c'est-à-dire toutes les vannes pour lesquelles la distance mesurée par les capteurs correspondants est sensiblement égale à la valeur de référence D.

Le pilotage de chacune des vannes 66.1 à 66.i en fonction des distances mesurées par leurs capteurs respectifs permet d'appliquer un produit de revêtement sur des surfaces très gauches, comme la surface S des figures 9 et 10, qui délimite un bord curviligne S.1, tout en déplaçant l'applicateur 6 en ligne droite et ce sans perdre de produit de revêtement.

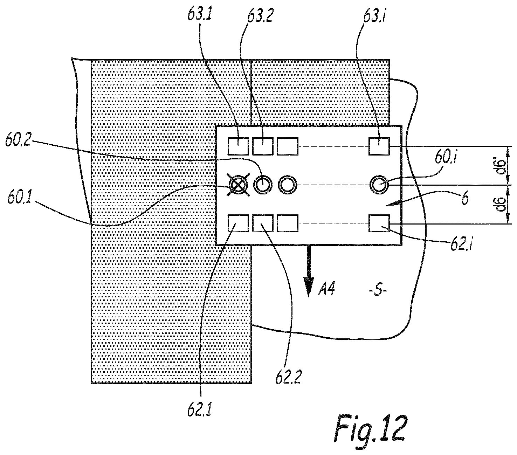

L'applicateur 6 de la figure 12, conforme au cinquième mode de réalisation, diffère de celui du premier mode de réalisation en ce qu'il comprend, en outre, une deuxième rangée de capteurs de distance, respectivement référencés 63.1 à 63.i, lesquels sont disposés de manière perpendiculaire au déplacement A4 de l'applicateur 6. Les capteurs 63.1 à 63.i sont des capteurs de mesure d'épaisseur disposés en retard par rapport aux buses 60.1 à 60.i sur le trajet de l'applicateur 6. Ainsi, la position des buses 60.1 à 60.i à l'instant t correspond à la position des capteurs 63.1 à 63.i à l'instant t+Δt', où Δt' est une durée qui dépend de la vitesse de déplacement de l'applicateur 6 et de la distance d6' entre la rangée de buses 60.1 à 60.i et la rangée de capteurs 62.1 à 62.i, mesurée parallèlement à la direction de déplacement de l'applicateur 6. Dans le cas où la distance d6' est égale à la distance d6 définie précédemment, la durée Δt' est égale à la durée Δt. A défaut, les durée Δt et Δt' sont différentes. Les capteurs de distances 63.1 à 63.i sont identiques aux capteurs de distance 62.1 à 62.i et permettent de mesurer l'épaisseur du film de produit de revêtement appliqué par l'applicateur 6. Pour cela, l'applicateur de distance 63.1 à 63.i transmet la distance qu'il mesure à l'unité électronique de commande 68, laquelle compare les distances mesurées avec la valeur de référence D pour déterminer l'épaisseur du film de produit de revêtement appliqué sur la surface S. Les capteurs 63.1 à 63.i permettent donc de contrôler l'uniformité de l'épaisseur du film déposé par l'applicateur 6.

Avantageusement, dans le cas où les capteurs 63.1 à 63.i détectent des zones de la surface S dans lesquelles l'épaisseur du film de produit de revêtement serait moindre par rapport à l'épaisseur souhaitée, l'applicateur 6 peut effectuer un nouveau passage, pour uniformiser l'épaisseur du produit de revêtement appliqué sur la surface S.

En variante applicable au cinquième mode de réalisation, l'applicateur 6 ne comprend qu'un seul capteur de mesure d'épaisseur, comparable au capteur de distance 62.

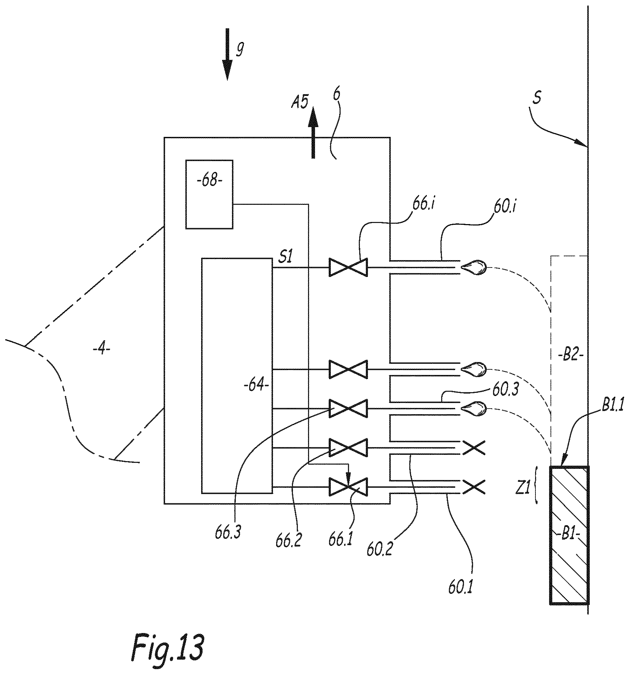

Sur la figure 13 est représenté un applicateur de produit de revêtement conforme à un sixième mode de réalisation de l'invention. Dans ce qui suit, seules les différences par rapport au premier mode de réalisation sont décrites par souci de concision.

L'applicateur de la figure 13 est conçu pour compenser l'effet de la gravité g sur les gouttes de produit éjectées à travers les buses 60.1 à 60.i.

En effet, lorsque la tête d'impression 6 se trouve dans la configuration des figures 1 à 12, l'effet de la gravité g est négligeable sur la direction des gouttes de produit de revêtement éjectées à travers les buses 60.1 à 60.i. Toutefois, lorsque la tête d'impression 6 est inclinée à 90°, comme représenté à la figure 13, les gouttes de produit de revêtement sont déviées, sous l'effet de la gravité g, par rapport à l'axe de pulvérisation des buses, lequel est horizontal dans l'exemple. La déviation des gouttes peut entrainer des défauts de recouvrement et/ou des zones de surépaisseur.

Pour éviter cela, l'applicateur 6 est repositionné lorsque la surface S à revêtir est verticale ou inclinée. Cette étape de repositionnement consiste à déplacer l'applicateur 6 avec une certaine amplitude et selon une direction A5 parallèle à un axe de la rangée des buses 60.1 à 60.i pour compenser la déviation du produit de revêtement due à la gravité g. Ainsi, la direction A5 de ce déplacement compensatoire est orientée vers le haut. Elle est également perpendiculaire à la direction de déplacement de l'applicateur qui, dans l'exemple de la figure 13, est perpendiculaire au plan de la figure 13.

L'amplitude de déplacement de l'applicateur 6 lors de l'étape de repositionnement est calculée dynamiquement en fonction de l'inclinaison de l'applicateur 6 par rapport au sol, de la distance d'application des buses 60.1-60.i, de la vitesse d'éjection du produit à travers les buses et de la taille des gouttes de produit de revêtement, étant entendu que la taille des gouttes correspond à la taille des buses 60.1 à 60.i. Tous ces paramètres sont enregistrés en mémoire dans le contrôleur du robot 2, qui n'est pas représenté sur les figures. La valeur d'inclinaison de l'applicateur 6 par rapport au sol est actualisée automatiquement en fonction de l'orientation de l'applicateur 6 dans le repère « outil ».

L'amplitude du déplacement compensatoire, ou « offset » en anglais, peut aussi être extraite d'un abaque préenregistré, dans lequel sont enregistrées toutes les valeurs de déplacement à appliquer pour compenser l'effet de la gravité en fonction des différents paramètres influents.

L'étape de repositionnement est effectuée par le robot multiaxes 2. Plus précisément, l'amplitude du déplacement compensatoire est calculée par le contrôleur du robot, lequel envoie un signal de commande à l'actionneur du bras du robot pour déplacer l'applicateur dans la direction prévue et avec l'amplitude prévue.

En variante applicable à ce sixième mode de réalisation, l'unité électronique de commande 68 est programmée pour fermer la vanne de la ou des buses susceptibles de projeter, à cause de la gravité, du produit de revêtement sur une zone Z1 de la surface S déjà revêtue. Dans l'exemple de la figure 13, l'applicateur 6 se déplace à une altitude telle que les buses 60.1 et 60.2 sont susceptibles de projeter des gouttes de produit sur la zone Z1 déjà recouverte par la bande B1 de produit de revêtement. Les vannes 66.1 et 66.2 sont donc fermées. Les vannes à fermer sont identifiées principalement en fonction de l'altitude de l'applicateur 6 par rapport à la bande B1 de produit de revêtement recouvrant une partie de la surface S. D'autres paramètres sont également à prendre en compte, comme l'inclinaison de l'applicateur 6 par rapport au sol, la distance d'application des buses, la vitesse d'éjection du produit à travers les buses et la taille des gouttes de produit de revêtement. L'altitude de l'applicateur 6 est un paramètre de consigne contrôlé par le contrôleur du robot. Un avantage de cette variante est que cela permet de résoudre le problème de la déviation des gouttes de produit de revêtement sous l'effet de la gravité sans utiliser un robot très précis puisqu'il n'y a pas de déplacement compensatoire.

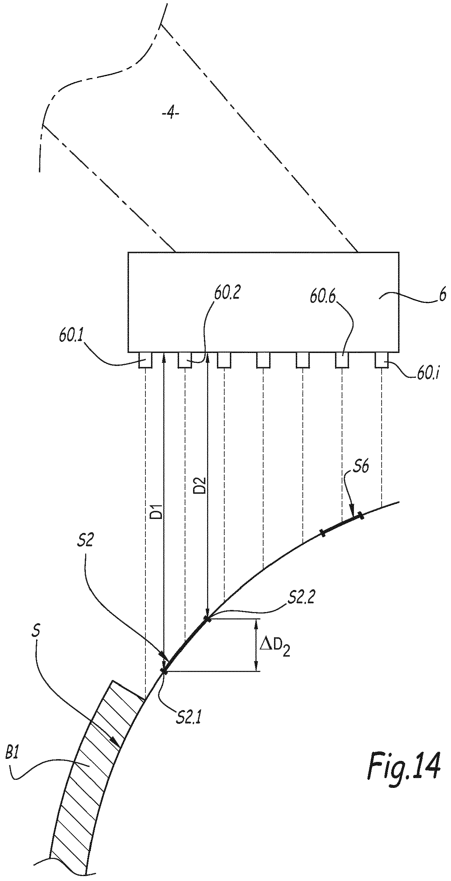

Sur la figure 14 est représenté un applicateur de produit de revêtement conforme à un septième mode de réalisation de l'invention. Dans ce qui suit, seules les différences par rapport aux autres modes de réalisation sont décrites par souci de concision.

L'applicateur de la figure 14 est conçu pour obtenir un recouvrement irréprochable, même sur une surface gauche S. De manière comparable au troisième mode de réalisation, l'applicateur 6 de la figure 14 comprend des vannes proportionnelles.

Lors de l'étape b) décrite précédemment, chaque buse 60.k parmi les buses 60.1 à 60.i est destinée à revêtir une certaine portion Sk de la surface S, k étant un entier naturel entre 1 et i.

Par exemple et en référence à la figure 14, la buse 60.2 est destinée à revêtir la portion S2 de la surface S lors du déplacement de l'applicateur 6, alors que la buse 60.6 est destinée à revêtir la portion S6 de la surface S. Dans le plan de la figure 14, ces portions de surface apparaissent sous forme de segments en trait gras. Les portions respectives des buses 60.1 à 60.i sont jointives. La largeur des portions de surface Sk dépend de la largeur des buses et du coefficient d'étalement. Lorsque la portion de surface Sk est sensiblement perpendiculaire à l'axe de pulvérisation des buses, l'aire de la portion de surface Sk correspond sensiblement à l'aire de la surface revêtue, sous un débit nominal, une fois que la goutte issue de la buse 60.k s'est étalée.

En revanche, lorsque la portion de surface Sk n'est pas perpendiculaire à l'axe de pulvérisation des buses, comme c'est le cas par exemple pour la portion de surface S2 relative à la buse 60.2, l'aire de la surface revêtue, sous un débit nominal, est inférieure à l'aire de la portion de surface Sk à revêtir. Il y a donc un défaut de recouvrement.

Pour pallier ce défaut de recouvrement, le débit de chaque buse 60.k parmi les buses 60.1 à 60.i est contrôlé en fonction de l'inclinaison de la portion de surface respective Sk par rapport à un plan perpendiculaire à la direction de pulvérisation des buses 60.1 à 60.i. Dans la configuration de la figure 14, ce plan est horizontal.

Le débit appliqué est d'autant plus important que la portion de surface à revêtir correspondante est inclinée, de manière à compenser le manque de produit de revêtement.

L'inclinaison de chaque portion de surface Sk par rapport au plan perpendiculaire à l'axe de pulvérisation des buses est calculée par l'unité électronique de commande 68 en déterminant l'écart de distance ΔDₖ, mesuré parallèlement à l'axe de pulvérisation des buses 60.1 à 60.i, entre deux points d'extrémité Sk.1 et Sk.2 de chaque portion de surface Sk. Ces deux points sont disposés, le long du profil de surface, sur des lignes de frontière opposées de la portion de surface Sk, ces lignes de frontière s'étendant parallèlement à la direction de déplacement de l'applicateur. 6.

Sur la figure 14, les points d'extrémité de la portion de surface S2 sont représentés avec les références S2.1 et S2.2, l'écart entre ces deux points étant représenté par la mesure ΔD₂ correspondant à la différence entre la distance D1 et la distance D2. Pour le cas de la portion de surface S2, l'unité électronique 68 compare donc une distance D1, mesurée parallèlement à l'axe de pulvérisation des buses, entre le point S2.1 et le capteur de distance et une distance D2, mesurée parallèlement à l'axe de pulvérisation des buses, entre le point S2.2 et le capteur de distance.

Ainsi, le débit de produit de revêtement s'écoulant à travers une buse 60.k est d'autant plus élevé que l'écart de distance ΔDₖ est élevé. Avantageusement, la relation entre le débit et l'écart de distance ΔDₖ est une relation de type linéaire.

Par exemple, comme visible à la figure 14, la portion de surface S6 destinée à être recouverte par la buse 60.6 présente une aire moins importante que la portion de surface S2 destinée à être recouverte par la buse 60.2. Ainsi, le débit de produit de revêtement appliqué par la buse 60.2 est plus élevé que le débit de produit de revêtement appliqué par la buse 60.6.

En variante non représentée, l'applicateur 6 comprend plusieurs rangées de buses alignées les unes avec les autres.

Selon une autre variante applicable au cinquième mode de réalisation, l'applicateur 6 comprend en outre une seconde rangée de buses disposée en aval du ou des capteurs 63.1 à 63.i sur le trajet de l'applicateur 6. Autrement dit, la seconde rangée de buses est disposée en retard par rapport à chaque capteur de mesure d'épaisseur 63.1-63.i sur le trajet A4 de l'applicateur 6. Cette seconde rangée de buses comprend également i buses, lesquelles sont réparties de manière identique à la rangée de buses 60.1 à 60.i. Cette seconde rangée de buses permet de compenser un éventuel défaut de recouvrement, ou manque d'épaisseur, détecté par le ou les capteurs 63.1 à 63.i et d'homogénéiser ainsi l'épaisseur de la couche de produit de revêtement appliqué sans faire d'allers retours. Un tel manque d'épaisseur peut apparaitre lorsqu'une buse de la première rangée, c'est-à-dire la rangée amont de buses 60.1 à 60.i, est bouchée, ou du moins présente un dysfonctionnement. Un manque d'épaisseur peut aussi apparaitre lors du revêtement d'une surface gauche, telle que représentée à la figure 14 en relation avec le septième mode de réalisation, ou lors d'un recouvrement défectueux à la jonction entre deux bandes de produit de revêtement. Un autre avantage de cette variante est que le pilotage des vannes 66.1 à 66.i de la première rangée de buses peut être simplifié car les défauts de recouvrement peuvent être corrigés quasi-instantanément.

Selon une autre variante non représentée, l'applicateur 6 comprend une seule vanne 66.1, correspondant à la vanne de la première buse 60.1 de la rangée. Dans ce cas, l'applicateur 6 ne comprend qu'un seul capteur 62.1 prévu pour mesurer la distance d'application de la première buse 60.1 à un point avancé par rapport à celle-ci sur le trajet de l'applicateur 6.

Selon une autre variante non représentée, uniquement la première buse 60.1 et la dernière buse 60.i de la rangée comportent une vanne, respectivement 66.1 et 66.i. Dans ce cas, l'applicateur comprend uniquement deux capteurs de distance, respectivement 62.1 et 62.i, prévus pour mesurer respectivement la distance d'application de la première buse 60.1 et de la dernière buse 60.i à un point avancé sur le trajet de l'applicateur 6.

Selon une autre variante non représentée, d'autres types de capteurs de distance peuvent être envisagés, comme des capteurs à ultrasons.

Les caractéristiques des variantes et modes de réalisation de l'invention mentionnés ci-dessus peuvent être combinées entre elles pour générer de nouveaux modes de réalisation de l'invention.

## Revendications

1. Applicateur (6) d'un produit de revêtement sur une surface à revêtir (S), comprenant au moins une rangée de buses (60.1 - 60.i), parmi lesquelles au moins la première buse (60.1) de la rangée comporte une vanne (66.1), l'applicateur comprenant, en outre,
- au moins un capteur de distance (62 ; 62.1), pour mesurer une distance d'application (d2) de la première buse (60.1) à un point avancé (t+Δt) par rapport à celle-ci sur un trajet (A2, A4) de l'applicateur, et
- une unité électronique (68) de commande de la vanne (66.1), qui est programmée pour effectuer les étapes suivantes :
i) collecter la distance (d2) mesurée par le capteur de distance,
ii) en fonction de la valeur de la distance collectée à l'étape i), ouvrir ou fermer la vanne (66.1), tel que:
- chaque buse (60.1-60.i) de la rangée comprend une vanne (66.1-66.i),
- le capteur de distance (62) est apte à mesurer la distance d'application de certaines buses au moins de la rangée à des points respectivement avancés par rapport à celles-ci sur le trajet (A2, A4) de l'applicateur, l'applicateur étant **caractérisé en ce que** :
- le capteur de distance (62 ; 62.1-62.i) est un capteur laser, comprenant une cellule émettrice d'un faisceau laser (F1, F2, F3) et une cellule réceptrice d'un faisceau laser réfléchi (F'1, F'2, F'3), et
- le capteur de distance (62) est apte à balayer avec son faisceau une ligne perpendiculaire à la direction de déplacement de l'applicateur, de manière à mesurer la distance d'application de certaines buses au moins de la rangée, à des points avancés par rapport à celles-ci sur le trajet (A2, A4) de l'applicateur.

2. Applicateur selon la revendication 1, **caractérisé en ce que** l'unité électronique de commande (68) est programmée pour collecter les distances (d2) mesurées par le capteur de distance, afin de déterminer un profil de la surface (S) à revêtir sur tout ou partie de la largeur d'application de l'applicateur, analyser le profil de surface pour détecter la position d'un bord d'une couche de produit de revêtement le long du profil de la surface, ouvrir toutes les vannes des buses qui sont disposées d'un côté du bord et fermer les vannes disposées de l'autre côté du bord le long du profil de la surface.

3. Applicateur selon la revendication 1 ou 2, **caractérisé en ce que** les vannes (66.1-66.i) sont des vannes proportionnelles et **en ce que** l'unité électronique de commande (68) est programmée pour établir un profil d'épaisseur de la couche de produit de revêtement dans un plan perpendiculaire à la direction de déplacement de l'applicateur et pour contrôler le débit des vannes (66.1- 66.i) en fonction de l'épaisseur de la couche mesurée en chacun des points d'application des buses (60.1-60.i).

4. Applicateur selon l'une des revendications précédentes, **caractérisé en ce que** chaque vanne (66.1 - 66.i) est une vanne piézoélectrique, dont le débit dépend d'une fréquence d'excitation de la vanne.

5. Applicateur selon l'une des revendications précédentes, **caractérisé en ce que** l'unité électronique de commande (68) est programmée pour fermer la vanne (66.1) de la première buse (60.1) lorsque la distance (d2) mesurée par le capteur (62.1) est sensiblement supérieure à une valeur de référence (D).

6. Applicateur selon l'une des revendications précédentes, **caractérisé en ce que** l'applicateur comprend en outre au moins un capteur de mesure d'épaisseur (63.1-63.i), configuré pour mesurer respectivement l'épaisseur du film de produit de revêtement appliqué par les buses (60.1-60.i) en des points reculés par rapport à celles-ci sur le trajet de l'applicateur.

7. Applicateur selon la revendication 6, **caractérisé en ce qu'**il comprend une autre rangée de buses, disposée en retard par rapport à chaque capteur de mesure d'épaisseur (63.1-63.i) sur le trajet (A4) de l'applicateur (6).

8. Robot multiaxes (2), comprenant un bras mobile (4) sur lequel est monté un applicateur (6) selon l'une des revendications précédentes.

9. Procédé d'application d'un produit de revêtement (B) sur la surface (S) d'une pièce (8), ce procédé étant mis en oeuvre au moyen d'un applicateur comprenant au moins une rangée de buses (60.1: 60.i), parmi lesquelles au moins la première buse (60.1) de la rangée comporte une vanne (66.1), ce procédé comprenant des étapes consistant à :
a) déplacer l'applicateur (6) selon une première direction (A1) pour appliquer une première couche de produit de revêtement (B1),
b) déplacer l'applicateur (6) selon une deuxième direction (A2) sensiblement parallèle à la première direction pour appliquer une seconde couche (B2) de produit de revêtement de manière jointive à la première couche (B1), ce procédé étant **caractérisé en ce que** l'étape b) comprend des sous-étapes consistant à :
b1) mesurer au moins une distance d'application (d2) de la première buse (60.1) à un point avancé (t+Δt) par rapport à celle-ci sur un trajet (A2) de l'applicateur, et
b2) en fonction la distance d'application mesurée, ouvrir ou fermer la vanne (66.1).

10. Procédé selon la revendication 9, **caractérisé en ce que**
la sous-étape b1) consiste à collecter des distances d'application (d1, d2) de certaines buses au moins de la rangée à des points respectivement avancés par rapport à celles-ci sur le trajet de l'applicateur, afin de déterminer un profil de la surface (S) à revêtir sur tout ou partie de la largeur d'application de l'applicateur (6), alors que
la sous-étape b2) consiste à analyser le profil de surface pour détecter la position d'un bord (B1.1) de la première couche (B1) de produit de revêtement le long du profil de la surface (S) et à ouvrir toutes les vannes des buses qui sont disposées d'un côté du bord (B1.1) et fermer les vannes disposées de l'autre côté du bord (B1.1) le long du profil de la surface (S).

11. Procédé selon la revendication 10, **caractérisé en ce que** les vannes (66.1-66.i) sont des vannes proportionnelles et **en ce que** l'étape b) comprend d'autres sous-étapes consistant à:
i. établir un profil d'épaisseur de la couche de produit de revêtement le long de l'axe (X-X'), et à
ii. contrôler le débit des vannes en fonction de l'épaisseur de la couche en chacun des points avancés.

12. Procédé selon l'une des revendications 9 à 11, comprenant en outre une étape consistant à repositionner (A5) l'applicateur (6) lorsque la surface (S) est verticale ou inclinée et en ce que cette étape de repositionnement consiste à déplacer (A5) l'applicateur (6) avec une certaine amplitude et selon une direction parallèle à un axe de la rangée de buses (60.1 : 60.i) pour compenser la déviation du produit de revêtement due à la gravité.

13. Procédé selon la revendication 12, **caractérisé en ce que** l'amplitude de déplacement de l'applicateur (6) lors de l'étape de repositionnement est calculée dynamiquement en fonction de l'inclinaison de l'applicateur (6) par rapport au sol, de la distance d'application des buses (60.1-60.i), de la vitesse d'éjection du produit à travers les buses et de la taille des buses ou est extraite d'un abaque préenregistré.

14. Procédé selon l'une des revendications 9 à 11, comprenant en outre une étape consistant à fermer la vanne (66.1, 66.2) de la ou des buses (60.1, 60.2) susceptibles de projeter, à cause de la gravité, du produit de revêtement sur une zone (Z1) de la surface (S) recouverte par la première couche (B1) de produit de revêtement.

15. Procédé selon l'une quelconque des revendications 9 à 14, **caractérisé en ce que** les vannes (66.1-66.i) sont des vannes proportionnelles et **en ce que** l'étape b) comprend en outre les sous-étapes suivantes:
i. évaluer l'inclinaison de la portion de surface (Sk) destinée à être recouverte par chaque buse par rapport à un plan perpendiculaire à un axe de pulvérisation des buses, et
ii. contrôler le débit de produit de revêtement appliqué par chaque buse en fonction de l'inclinaison de la portion de surface (Sk) destinée à être recouverte par la buse correspondante.

## Patentansprüche

1. Auftragevorrichtung (6) für ein Beschichtungsprodukt auf eine zu beschichtende Fläche (S), mindestens eine Reihe Düsen (60.1 - 60.i) umfassend, von denen zumindest die erste Düse (60.1) der Reihe ein Ventil (66.1) hat, darüber hinaus umfassend,
- mindestens einen Abstandssensor (62; 62.1), um einen Auftrageabstand (d2) der ersten Düse (60.1) zu einem vorausliegenden Punkt (t + Δt) in Bezug auf diejenige auf einer Bahn (A2, A4) der Auftragevorrichtung zu messen, und
- eine elektronische Steuereinheit (68) für das Ventil (66.1), die programmiert ist, um die folgenden Schritte auszuführen:
i) den vom Abstandssensor gemessenen Abstand (d2) zu erfassen,
ii) in Abhängigkeit vom Wert des im Schritt i) erfassten Abstands das Ventil (66.1) zu öffnen oder zu schließen,
derart, dass:
- jede Düse (60.1 - 60.i) der Reihe ein Ventil (66.1 - 66.i) umfasst,
- der Abstandssensor (62) in der Lage ist, den Auftrageabstand zumindest mancher Düsen der Reihe zu jeweils vorausliegenden Punkten in Bezug auf diejenigen auf der Bahn (A2, A4) der Auftragevorrichtung zu messen,
wobei die Auftragevorrichtung **dadurch gekennzeichnet ist, dass**:
- der Abstandssensor (62; 62.1 - 62.i) ein Lasersensor ist, der eine Abstrahlzelle (F1, F2, F3) für einen Laserstrahl und eine Empfängerzelle (F'1, F'2, F'3) für einen reflektierten Laserstrahl umfasst, und
- der Abstandssensor (62) in der Lage ist, mit seinem Strahl eine zur Verschiebungsrichtung der Auftragevorrichtung senkrechte Linie abzutasten, um den Auftrageabstand zumindest mancher Düsen der Reihe zu vorausliegenden Punkten in Bezug auf diejenigen auf der Bahn (A2, A4) der Auftragevorrichtung zu messen.

2. Auftragevorrichtung nach Anspruch 1, **dadurch gekennzeichnet, dass** die elektronische Steuereinheit (68) dazu programmiert ist, die vom Abstandssensor gemessenen Abstände (d2) zu erfassen, um über die gesamte oder teilweise Auftragebreite der Auftragevorrichtung ein Profil der zu beschichtenden Fläche (S) zu bestimmen, das Flächenprofil zu analysieren, um die Position eines Rands einer Beschichtungsproduktschicht entlang des Profils der Fläche zu erkennen, alle Ventile der Düsen zu öffnen, die auf einer Seite des Rands angeordnet sind, und die Ventile zu schließen, die auf der anderen Seite des Rands entlang des Profils der Fläche angeordnet sind.

3. Auftragevorrichtung nach Anspruch 1 oder 2, **dadurch gekennzeichnet, dass** die Ventile (66.1 - 66.i) Proportionalventile sind, und dass die elektronische Steuereinheit (68) dazu programmiert ist, ein Dickenprofil der Beschichtungsproduktschicht in einer Ebene senkrecht zur Verschiebungsrichtung der Auftragevorrichtung zu erstellen und den Durchsatz der Ventile (66.1 - 66.i) in Abhängigkeit von der an jedem der Auftragepunkte der Düsen (60.1 - 60.i) gemessenen Dicke der Schicht zu kontrollieren.

4. Auftragevorrichtung nach einem der vorhergehenden Ansprüche, **dadurch gekennzeichnet, dass** jedes Ventil (66.1 - 66.i) ein piezoelektrisches Ventil ist, dessen Durchsatz von einer Anregungsfrequenz des Ventils abhängt.

5. Auftragevorrichtung nach einem der vorhergehenden Ansprüche, **dadurch gekennzeichnet, dass** die elektronische Steuereinheit (68) dazu programmiert ist, das Ventil (66.1) der ersten Düse (60.1) zu schließen, wenn der vom Sensor (62.1) gemessene Abstand (d2) wesentlich höher ist als ein Referenzwert (D).

6. Auftragevorrichtung nach einem der vorhergehenden Ansprüche, **dadurch gekennzeichnet, dass** die Auftragevorrichtung darüber hinaus mindestens einen Dickenmesssensor (63.1 - 63.i) umfasst, der dazu konfiguriert ist, jeweils die Dicke des von den Düsen (60.1 - 60.i) aufgetragenen Beschichtungsproduktfilms an zurückliegenden Punkten in Bezug auf diejenigen auf der Bahn der Auftragevorrichtung zu messen.

7. Auftragevorrichtung nach Anspruch 6, **dadurch gekennzeichnet, dass** sie eine weitere Reihe Düsen umfasst, die in Bezug auf jeden Dickenmesssensor (63.1 - 63.i) auf der Bahn (A4) der Auftragevorrichtung (6) dahinterliegend angeordnet ist.

8. Mehrachsiger Roboter (2), einen beweglichen Arm (4) umfassend, an dem eine Auftragevorrichtung (6) nach einem der vorhergehenden Ansprüche angebracht ist.

9. Verfahren zum Auftragen eines Beschichtungsprodukts (B) auf eine Fläche (S) eines Bauteils (8), wobei dieses Verfahren mittels einer Auftragevorrichtung umgesetzt wird, die mindestens eine Reihe Düsen (60.1: 60.i) umfasst, von denen zumindest die erste Düse (60.1) der Reihe ein Ventil (66.1) hat, wobei das Verfahren Schritte umfasst, die darin bestehen:
a) die Auftragevorrichtung (6) in einer ersten Richtung (A1) zu verschieben, um eine erste Beschichtungsproduktschicht (B1) aufzutragen,
b) die Auftragevorrichtung (6) in einer zweiten, zur ersten Richtung im Wesentlichen parallelen Richtung (A2) zu verschieben, um eine zweite Beschichtungsproduktschicht (B2) stoffschlüssig an der ersten Schicht (B1) aufzutragen,
wobei dieses Verfahren **dadurch gekennzeichnet ist, dass** der Schritt b) Teilschritte umfasst, die darin bestehen:
b1) mindestens einen Auftrageabstand (d2) der ersten Düse (60.1) zu einem vorausliegenden Punkt (t + Δt) in Bezug auf diejenige auf einer Bahn (A2) der Auftragevorrichtung zu messen, und
b2) in Abhängigkeit vom gemessenen Auftrageabstand das Ventil (66.1) zu öffnen oder zu schließen.

10. Verfahren nach Anspruch 9, **dadurch gekennzeichnet, dass**
der Teilschritt b1) darin besteht, Auftrageabstände (d1, d2) zumindest mancher der Düsen der Reihe zu jeweils vorausliegenden Punkten in Bezug auf diejenigen auf der Bahn der Auftragevorrichtung zu erfassen, um über die gesamte oder teilweise Auftragebreite der Auftragevorrichtung (6) ein Profil der zu beschichtenden Fläche (S) zu bestimmen, während
der Teilschritt b2) darin besteht, das Flächenprofil zu analysieren, um die Position eines Rands (B1.1) der ersten Schicht (B1) des Beschichtungsprodukts entlang des Profils der Fläche (S) zu erkennen und alle Ventile der Düsen zu öffnen, die auf einer Seite des Rands (B1.1) angeordnet sind, und die Ventile zu schließen, die auf der anderen Seite des Rands (B1.1) entlang des Profils der Fläche (S) angeordnet sind.

11. Verfahren nach Anspruch 10, **dadurch gekennzeichnet, dass** die Ventile (66.1 - 66-i) Proportionalventile sind, und dass der Schritt b) weitere Teilschritte umfasst, die darin bestehen:
i. ein Dickenprofil der Beschichtungsproduktschicht entlang der Achse (X - X') zu erstellen, und
ii. den Durchsatz der Ventile in Abhängigkeit von der Dicke der Schicht an jedem der vorausliegenden Punkte zu kontrollieren.

12. Verfahren nach einem der Ansprüche 9 bis 11, darüber hinaus einen Schritt umfassend, der darin besteht, die Auftragevorrichtung (6) umzupositionieren (A5), wenn die Fläche (S) vertikal oder geneigt ist, und dass dieser Umpositionierungsschritt darin besteht, die Auftragevorrichtung (6) mit einer bestimmten Amplitude und in einer Richtung parallel zu einer Achse der Reihe Düsen (60.1: 60.i) zu verschieben (A5), um die schwerkraftbedingte Abweichung des Beschichtungsprodukts auszugleichen.

13. Verfahren nach Anspruch 12, **dadurch gekennzeichnet, dass** die Verschiebungsamplitude der Auftragevorrichtung (6) beim Umpositionierungsschritt in Abhängigkeit von der Neigung der Auftragevorrichtung (6) in Bezug auf den Boden, des Auftrageabstands der Düsen (60.1 - 60.i), der Ausstoßgeschwindigkeit des Produkts durch die Düsen hindurch und der Größe der Düsen dynamisch berechnet oder aus einer vorab gespeicherten Rechenvorlage extrahiert wird.

14. Verfahren nach einem der Ansprüche 9 bis 11, darüber hinaus einen Schritt umfassend, der darin besteht, das Ventil (66.1, 66.2) der Düse oder Düsen (60.1, 60.2) zu schließen, die schwerkraftbedingt das Beschichtungsprodukt auf einen Bereich (Z1) der mit der ersten Schicht (B1) des Beschichtungsprodukts überzogenen Fläche (S) ausstoßen könnte/n.

15. Verfahren nach einem der Ansprüche 9 bis 14, **dadurch gekennzeichnet, dass** die Ventile (66.1 - 66.i) Proportionalventile sind, und dass der Schritt b) darüber hinaus die folgenden Teilschritte umfasst:
i. die Neigung des Flächenteils (Sk), der dazu bestimmt ist, mittels jeder Düse überzogen zu werden, in Bezug auf eine zu einer Zerstäubungsachse der Düsen senkrechte Ebene auszuwerten, und
ii. den Durchsatz des mittels jeder Düse aufgetragenen Beschichtungsprodukts in Abhängigkeit von der Neigung des Flächenteils (Sk), der dazu bestimmt ist, mittels der entsprechenden Düse überzogen zu werden, zu kontrollieren.

## Claims

1. An applicator (6) of a coating product on a surface to be coated (S), including at least one row of nozzles (60.1 - 60.i), among which at least the first nozzle (60.1) in the row includes a valve (66.1), the applicator further comprising:
- at least one distance sensor (62; 62.1), to measure an application distance (d2) of the first nozzle (60.1) from a point (t+Δt) in front of the latter on a path (A2, A4) of the applicator, and
- an electronic control unit (68) of the valve (66.1), which is programmed to carry out the following steps:
i) collect the distance (d2) measured by the distance sensor,
ii) based on the distance value collected in step i), open or close the valve (66.1),
**characterized in that**:
- each nozzle (60.1-60.i) in the row comprises a valve (66.1-66.i),
- the distance sensor (62) is able to measure the application distance of at least certain nozzles in the row at respective points in front of the latter on the path (A2, A4) of the applicator,
- the distance sensor (62; 62.1-62.i) is a laser sensor, comprising a cell emitting a laser beam (F1, F2, F3) and a cell receiving a reflected laser beam (F'1, F'2, F'3), and
- the distance sensor (62) is able to scan, with its beam, a line perpendicular to the movement direction of the applicator, so as to measure the application distance of at least certain nozzles in the row, at points in front of the latter on the path (A2, A4) of the applicator.

2. The applicator according to claim 1, **characterized in that** the electronic control unit is programmed to collect the distances measured by the distance sensor, in order to determine a profile of the surface to be coated over all or part of the application width of the applicator, analyze the surface profile to detect the position of an edge of a layer of coating product along the profile of the surface, open all of the valves of the nozzles that are positioned on one side of the edge and close the valves positioned on the other side of the edge along the profile of the surface.

3. The applicator according to claim 1 or 2, **characterized in that** the valves are proportional valves, while the electronic control unit is programmed to establish a thickness profile of the layer of coating product along the axis and to monitor the flow rate of the valves based on the thickness of the layer at each of the forward points.

4. The applicator according to one of the preceding claims, **characterized in that** each valve (66.1 - 66.i) is a piezoelectric valve, the flow rate of which depends on an excitation frequency of the valve.

5. The applicator according to one of the preceding claims, **characterized in that** the electronic control unit (68) is programmed to close the valve (66.1) of the first nozzle (60.1) when the distance (d2) measured by the sensor (62.1) is substantially greater than a reference value (D).

6. The applicator according to one of the preceding claims, **characterized in that** it further comprises at least one thickness measuring sensor (63.1-63.i), configured to respectively measure the thickness of the film of coating product applied by the nozzles (60.1-60.i) at points withdrawn relative to those on the path of the applicator.

7. The applicator according to claim 6, **characterized in that** it comprises another row of nozzles, positioned on a delay relative to each thickness measuring sensor (63.1-63.i) on the path (A4) of the applicator (6).

8. A multiaxis robot (2), comprising a moving arm (4) on which an applicator (6) according to one of the previous claims is mounted.

9. A method of applying a coating product (B) on the surface (S) of a part, this method being carried out using an applicator comprising at least one row of nozzles (60.1-60.i), among which at least the first nozzle (60.1) in the row includes a valve (66.1), this method comprising the following steps:
a) moving the applicator (6) in a first direction (A1) to apply a first layer of coating product (B1),
b) moving the applicator (6) in a second direction (A2) substantially parallel to the first direction to apply a second layer (B2) of coating product adjacent to the first layer (B1),
this method being **characterized in that** step b) comprises sub-steps consisting of:
b1) measuring at least one application distance (d2) of the first nozzle (60.1) from a point (t+Δt) in front of the latter on a path (A2) of the applicator, and
b2) based on the measured application distance, opening or closing the valve (66.1).

10. The method according to claim 9, **characterized in that**
sub-step b1) consists of collecting application distances (d1, d2) of at least certain nozzles in the row at points respectively in front of the latter on the journey of the applicator, in order to determine a profile of the surface (S) to be coated over all or part of the application width of the applicator (6), while
sub-step b2) consists of analyzing the surface profile to detect the position of an edge (B1.1) of the first layer (B1) of coating product along the profile of the surface (S), and opening all of the valves of the nozzles that are positioned on one side of the edge (B1.1) and closing the valves positioned on the other side of the edge (B1.1) along the profile of the surface (S).

11. The method according to claim 10, **characterized in that** the valves (66.1-66.i) are proportional valves and **in that** step b) comprises other sub-steps consisting of:
i. establishing a thickness profile of the layer of coating product along the axis (X-X'), and
ii. monitoring the flow rate of the valves based on the thickness of the layer at each of the forward points.

12. The method according to one of claims 9 to 11, further comprising a step consisting of repositioning (A5) the applicator (6) when the surface (S) is vertical or inclined and in that this repositioning step consists of moving (A5) the applicator (6) with a certain amplitude and in a direction parallel to an axis of the row of nozzles (60.1- 60.i) to offset the deviation of the coating product due to gravity.

13. The method according to claim 12, **characterized in that** the movement amplitude of the applicator (6) during the repositioning step is computed dynamically based on the incline of the applicator (6) relative to the ground, the application distance of the nozzles (60.1-60.i), the ejection speed of the product through the nozzles and the size of the nozzles, or is extracted from a prerecorded chart.

14. The method according to one of claims 9 to 11, further comprising a step consisting of closing the valve (66.1, 66.2) of the nozzle(s) (60.1, 60.2) that may, due to gravity, spray coating product on a zone (Z1) of the surface (S) covered by the first layer (B1) of coating product.

15. The method according to any one of claims 9 to 14, **characterized in that** the valves (66.1-66.i) are proportional valves and **in that** step b) further comprises the following sub-steps:
i. evaluating the incline of the surface portion (Sk) intended to be covered by each nozzle relative to a plane perpendicular to a spray axis of the nozzles, and
ii. monitoring the flow rate of coating product applied by each nozzle based on the incline of the surface portion (Sk) intended to be covered by the corresponding nozzle.
